# EUROPÄISCHE PATENTSCHRIFT

(11) **EP 4 083 358 B1**
(45) Veröffentlichungstag und Bekanntmachung des Hinweises auf die Patenterteilung: **06.08.2025**
(21) Anmeldenummer: 22169756.8
(22) Anmeldetag: 25.04.2022
(51) Int. Cl.: B60J 5/10, E05C 17/36, E05B 83/10

(54) **NUTZFAHRZEUGAUFBAU FÜR INSBESONDERE KÜHLFAHRZEUGE**
COMMERCIAL VEHICLE STRUCTURE FOR REFRIGERATED ROAD VEHICLES IN PARTICULAR
CARROSSERIE DE VÉHICULE UTILITAIRE POUR, EN PARTICULIER VÉHICULES FRIGORIFIQUES

(30) Priorität: 26.04.2021 DE 102021110639
(43) Veröffentlichungstag der Anmeldung: 02.11.2022
(73) Patentinhaber: Fahrzeugwerk Bernard Krone GmbH & Co. KG, 49757 Werlte (DE)
(72) Erfinder: Holbech, Sören, Gjern (DK); Korsbakke, Keld, Silkeborg (DE)
(74) Vertreter: Weeg, Thomas

(56) Entgegenhaltungen:
- JP-U- H0 369 523
- JP-U- H0 522 786
- US-A- 4 269 439

## Beschreibung

Die Erfindung bezieht sich auf einen Nutzfahrzeugaufbau für insbesondere Kühlfahrzeuge mit einem von einem Laderaumboden, Seitenwänden, einem Dach, einer Stirnwand sowie zumindest einer aus einer Schließstellung in eine im Bereich einer Seitenwandung gelegene Öffnungsstellung aufschwenkbaren Hecktür und/oder Seitentür, wobei die Hecktür und/oder Seitentür in ihrer Öffnungsstellung über eine Feststellvorrichtung gegen ein unbeabsichtigtes Verschwenken sicherbar ist.

Nutzfahrzeugaufbauten der vorgenannten Art haben in der Regel als Heckwand zwei Flügelhecktüren, die in ihrer Schließstellung zu verriegeln sind und nach Entriegelung um ca. 270 ° aufgeschwenkt werden können, so dass sie sich in ihrer Öffnungsstellung parallel oder annähernd parallel zur zugeordneten Seitenwand erstrecken.

Um diese Hecktüren in ihrer geöffneten Stellung zu halten und um sie damit gegen ein unbeabsichtigtes Zuschwenken zu sichern, sind verschiedene Arten von Feststellvorrichtungen bekannt. So ist es bekannt, die Feststellvorrichtung mit einem Drahtseil zu versehen, das in einem Rohr unterhalb des Nutzfahrzeugchassis angebaut ist. Darüber hinaus sind Krückstockfeststellvorrichtungen bekannt, bei denen ein herausziehbarer abgewinkelter Krückstock verschwenkt werden kann, um die aufgeschwenkte Hecktür zu sichern. Darüber hinaus ist es bekannt, an einer Seitenwand und an dem Außenbereich einer Hecktür Magnetfeststeller anzubringen und die Tür in ihrer aufgeschwenkten Stellung mit Magnetkraft zu sichern. Den bisher bekannten Lösungen haften nicht unerhebliche Nachteile an. So ist die Bedienung und die Geräuschentwicklung bei einer Ausbildung der Feststellvorrichtung mit einem Drahtseil erheblich. Bei der Ausbildung der Feststellvorrichtung mit einem Krückstock kann sich dieses nachteilig beim Anfahren von Rampenschleusen durch Verbiegen von Krückstöcken auswirken. Darüber hinaus ist ein nicht unerheblicher Einbauraum unterhalb des Nutzfahrzeugaufbaus erforderlich. Darüber hinaus ist die Montage aufwendig mit vielen Verbindungsmitteln wie beispielsweise Nieten verbunden, die in isolierte Bereiche des Nutzfahrzeugaufbaus einzubringen sind.

Ein Nutzfahrzeugaufbau ist aus der US 4 269 439 A bekannt. Hier ist eine Türhaltevorrichtung in einer Seitenwand integriert.

Es ist Aufgabe der vorliegenden Erfindungen, ein Nutzfahrzeugaufbau der eingangs genannten Art derart weiterzubilden, dass die Feststellvorrichtung montagefreundlich am Nutzfahrzeugaufbau anzubringen ist, und dass die Feststellvorrichtung einfach und sicher zu bedienen ist und auch ein geräuscharmes und sicheres Halten einer geöffneten Seiten- und/oder Hecktür sicherstellt.

Zur Lösung dieser Aufgabe zeichnet sich der Nutzfahrzeugaufbau der eingangs genannten Art dadurch aus, dass die Feststellvorrichtung ein unterhalb des Laderaumbodens angeordnetes Aufnahmebauteil mit zumindest zwei Öffnungen für ein elastisches und vorspannbares Feststellorgan aufweist, das innerhalb des Aufnahmebauteils an mit Lageabstand zueinander angeordneten Führungskörpern geführt oder an Haltekörpern gehalten ist und dass das Feststellorgan durch die zwei Öffnungen aus dem Aufnahmebauteil unter Erzeugung einer Feststellspannkraft herausbewegbar und als Schlaufe an einem Feststellhalteteil der Hecktür und/oder Seitentür festlegbar ist.

Damit ist ein Nutzfahrzeugaufbau geschaffen, der insbesondere als Kühlfahrzeugaufbau ausgebildet sein kann aber nicht muss, bei dem die Feststellvorrichtung mit nur wenigen Befestigungsmitteln sehr montagefreundlich als vormontierte Bau- und Montageeinheit mit integriertem Feststellorgan an der Unterseite eines Nutzfahrzeugaufbaus bzw. eines Laderaumbodens anzubringen ist. Durch die Ausbildung des Feststellorgans als elastisches und vorspannbares Zugorgan kann dieses mit einer geringen Vorspannung sicher während seiner Außerbetriebsstellung innerhalb des Aufnahmebauteils gehalten werden. Soll das Feststellorgan zur Sicherung einer aufzuschwenkenden Hecktür und/oder Seitentür aktiviert werden, kann dieses manuell aus seiner Außerbetriebsstellung innerhalb des Aufnahmebauteils aus dem Aufnahmebauteil durch die beiden Öffnungen, die mit Lageabstand zueinander angeordnet sind, herausgeholt bzw. herausbewegt werden und unter Erzeugung einer Spannkraft gelängt werden, um dann als Schlaufe um das Feststellhalteteil der Hecktür und/oder Seitentür gelegt zu werden. Dies ist in sehr einfacher Weise und zeitlich schnell zu vollziehen. Aufgrund der geringen Vorspannung des Feststellorgans innerhalb des Aufnahmeteils erzeugt auch während einer Betriebsfahrt des Nutzfahrzeuges das Feststellorgan keine nennenswerten Betriebsgeräusche.

Das Feststellorgan selbst ist ein kostengünstiges Bauteil, das beispielsweise als Expanderseil oder als Expanderschnur ausgebildet sein kann. So kann dieses auch als Gummischnur oder Gummiseil ausgebildet sein oder auch als Feststellorgan, das mit einer Feder verbunden ist.

Bevorzugtermaßen ist das Feststellorgan ein Endlosexpanderseil oder eine Endlosexpanderschnur. Dieses kann innerhalb des Aufnahmeteiles um die dort mit Lageabstand zueinander angeordneten Führungskörper geführt sein. Aufgrund der eigenen gewissen Vorspannung ist dieses Endlosfeststellorgan sicher ohne sonstige Befestigungsmittel an den Führungskörpern in der Außerbetriebsstellung zu halten.

Alternativ ist es selbstverständlich auch möglich, das Feststellorgan mit zwei Enden auszubilden, wobei jedes Ende an mit Lageabstand innerhalb des Aufnahmebauteils angeordneten Haltekörpern zu befestigen ist. Dies kann auch derart erfolgen, dass dabei eine gewisse Vorspannung des Feststellorgans realisiert ist, um irgendwelchen Geräusche verursachende Bewegungen während einer Betriebsfahrt des Nutzfahrzeuges in der Außerbetriebsstellung des Feststellorgans zu vermeiden. Ansonsten kann dieses für die Betriebsstellung gleichermaßen wie bei einem als Endlosfeststellorgan ausgebildeten Feststellorgan aus dem Aufnahmebauteil herausgeholt bzw. herausbewegt und dabei gelängt werden unter Aufbau einer entsprechenden Feststellspannkraft und als Schlaufe um das Feststellhalteteil der Hecktür gelegt werden.

Bevorzugterweise hat das Aufnahmebauteil einen zum Erdboden hin offenen Führungskanal, in den die beiden Öffnungen des Aufnahmebauteils münden, und zwar an jeweils einem Ende des jeweiligen offenen Führungskanals. In diesem Führungskanal ist das Feststellorgan teilweise bzw. bereichsweise in seiner Außerbetriebsstellung gelegen. Besonders bevorzugt wird, wenn in den Aufnahmeteil eine fensterartige Öffnung zum manuellen Ergreifen des Feststellorgans vorgesehen ist. Dies kann eine einfache Auskragung in einer der Seitenaußenfläche des Fahrzeuges zugewandten Ausnehmung sein, in die jeweils ein linkes und ein rechtes vorderes Ende des Führungskanals mündet, so dass das Feststellorgan direkt hinter der fensterartigen Öffnung in der Außerbetriebsstellung verläuft, so dass es sehr einfach ergriffen werden kann. Die fensterartige Öffnung erstreckt sich dabei auch noch in einen Bereich des Aufnahmebauteils, der zum Erdboden hinweist, so dass sich eine fensterartige Öffnung zum manuellen Eingreifen für eine Bedienperson ergibt. Das Aufnahmeteil kann mit dem Unterteil des Nutzfahrzeuges verschraubt oder vernietet sein. Eine Schraubverbindung kann derart gestaltet sein, dass sie gleichfalls auch die Führungskörper innerhalb des Aufnahmebauteils bilden. Die Führungskörper können eine innere Bohrung aufweisen, um dort Befestigungsschrauben einzuführen.

Zur weiteren Erläuterung der Erfindung wird auf weitere Unteransprüche, die nachfolgende Beschreibung und die Zeichnung verwiesen. In der Zeichnung zeigen:
- Fig. 1:: In einer perspektivischen Darstellung seitlich und schräg von hinten ein Ausführungsbeispiel eines Nutzfahrzeugaufbaus nach der Erfindung mit geschlossenen Hecktüren;
- Fig. 2:: eine perspektivische (Teil-) Seitenansicht des Ausführungsbeispiels nach Fig. 1 mit geöffneter Hecktür;
- Fig. 3:: ausschnittsweise eine Seitenansicht des Ausführungsbeispiels nach Fig. 1 mit geschlossener Hecktür;
- Fig. 4:: eine Ansicht auf die Feststellvorrichtung von unten bei geöffneter Hecktür, wobei das Feststellorgan sich noch in der Außerbetriebsstellung befindet;
- Fig. 5:: eine Ansicht auf die Feststellvorrichtung von schräg hinten und von unten bei geschlossener Hecktür;
- Fig. 6:: eine Ansicht auf die Feststellvorrichtung seitlich von vorne bei geöffneter Hecktür und bei sich in Betriebsstellung befindlichem Feststellorgan;
- Fig. 7:: eine Ansicht auf die Feststellvorrichtung seitlich von vorne bei geöffneter Hecktür und sich in Betriebsstellung befindlichem Feststellorgan;
- Fig. 8:: eine Ansicht von oben auf ein Ausführungsbeispiel einer Feststellvorrichtung, die im montierten Zustand an der Unterseite des Nutzfahrzeugaufbaus gelegen ist;
- Fig. 9:: eine Ansicht von unten auf das Ausführungsbeispiel nach Fig. 8, die im montierten Zustand der Feststellvorrichtung zum Erdboden gerichtet ist;
- Fig. 10:: eine Seitenansicht auf das Ausführungsbeispiel nach den Fig. 9 und 10;.
- Fig. 11:: eine zu Fig. 8 analoge Darstellung des Ausführungsbeispiels nach Fig. 8 in einer perspektivischen Darstellung;
- Fig. 12:: eine zu Fig. 9 analoge Darstellung in perspektivischer Ansicht.

In der Zeichnung sind übereinstimmende Teile mit übereinstimmenden Bezugsziffern versehen.

Allgemein mit 1 ist ein Nutzfahrzeugaufbau beziffert mit einem Fahrzeugchassis 2, das über Räder 3 auf dem Erdboden abgestützt ist. Der Nutzfahrzeugaufbau 1 hat einen Laderaumboden 4, eine Stirnwand 5, zwei aufschwenkbare Hecktüren 6.1 und 6.2, Seitenwände 7 und ein Dach 8.

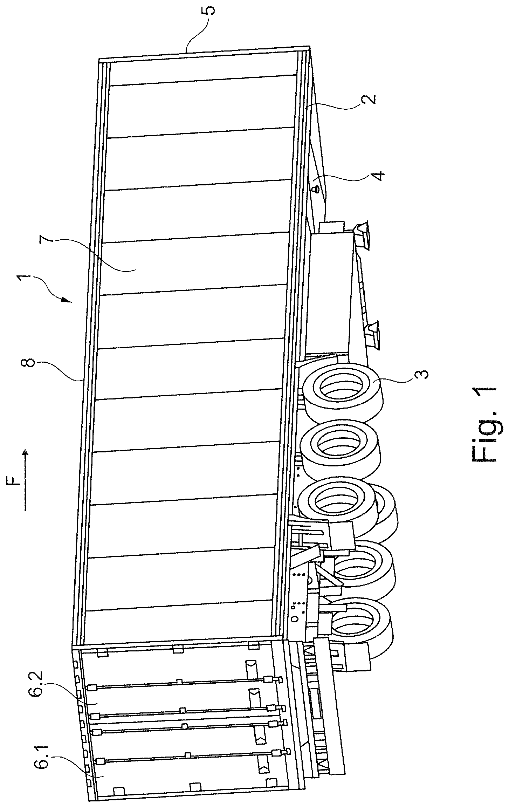

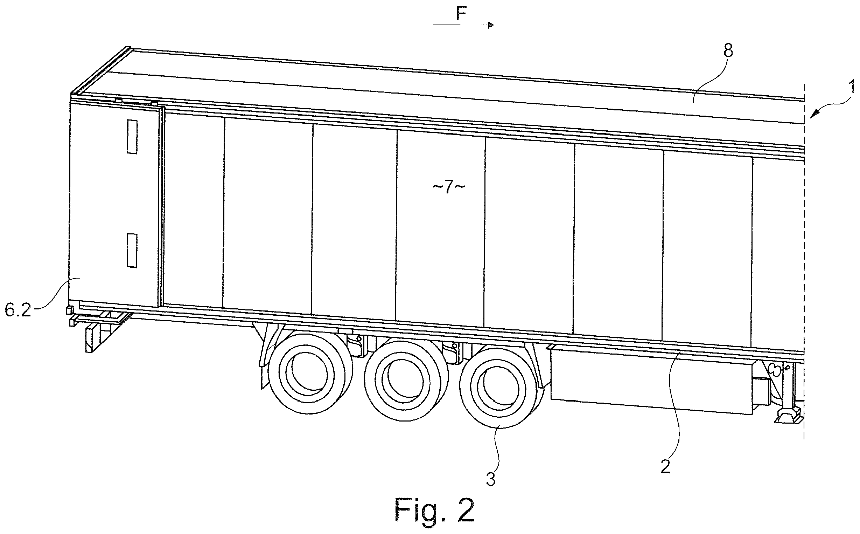

In der Ansicht nach Fig. 2 des Ausführungsbeispiels des Nutzfahrzeugaufbaus 1 nach Fig. 1 ist die in Fahrtrichtung F rechte Hecktür 6.2 im geöffneten Zustand dargestellt, wohingegen die Hecktüren 6.1 und 6.2 in Fig. 1 in geschlossenem verriegeltem Zustand dargestellt sind.

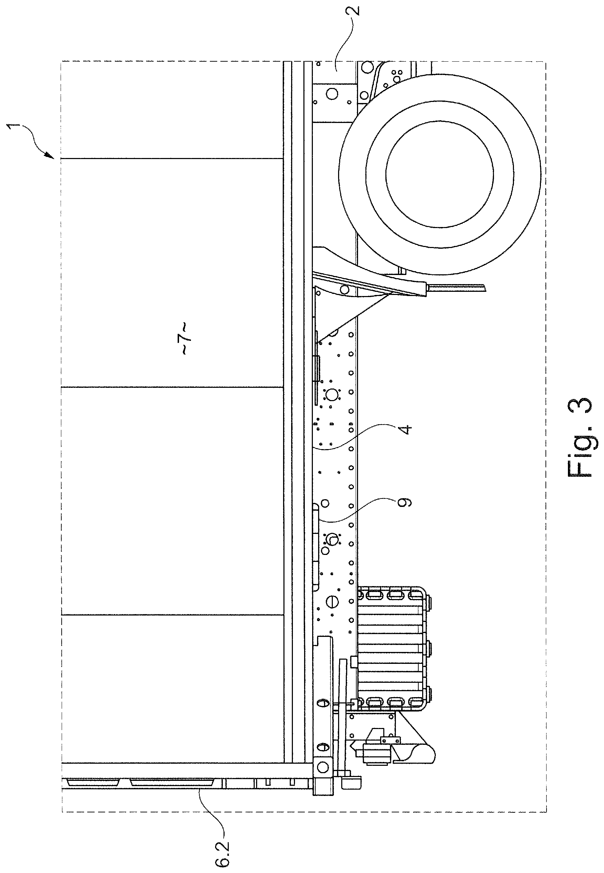

In dem in Fig. 3 vergrößert dargestelltem Ausschnitt der Seitenansicht des Nutzfahrzeugaufbaus 1 ist die rechte Hecktür 6.2 wiederum geschlossen. An der Unterseite des Laderaumbodens 4 bzw. des Nutzfahrzeugaufbaus 1 insgesamt ist eine Feststellvorrichtung 9 ersichtlich.

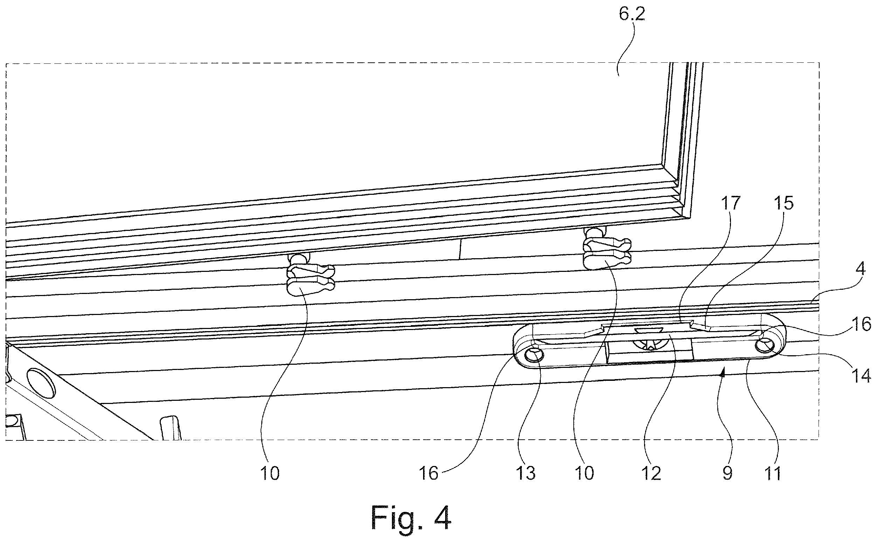

In der ausschnittsweisen vergrößerten Darstellung nach Fig. 4 ist die in Fahrtrichtung F rechte Hecktür 6.2 aufgeschwenkt (geöffneter Zustand). An der Hecktür 6.2 sind Feststellhalteteile 10 vorgesehen, die auch zum Verriegeln der Hecktür 6.2 im geschlossenen Zustand dienen. Diese sind als Schließhaken ausgebildet. In diese Ansicht schräg von unten auf die Feststellvorrichtung 9 ist ersichtlich, dass diese ein Aufnahmebauteil 11 und ein Feststellorgan 12 aufweist, welches in dem gezeigten Ausführungsbeispiel als Expanderseil ausgebildet ist. In Fig. 4 ist die Außerbetriebsstellung des Feststellorgans 12 gezeigt. In dieser Ruhestellung (Außerbetriebsstellung) weist das Feststellorgan 12 eine derartige Vorspannung auf, dass es sicher an den Führungskörpern geführt ist, ohne z. B. während einer Betriebsfahrt des Nutzfahrzeuges Geräusche zu erzeugen. Ersichtlich ist das Feststellorgan 12 in dieser Darstellung nach Fig. 4 noch nicht um ein Feststellhalteteil 10 an der Hecktür 6.2 geführt.

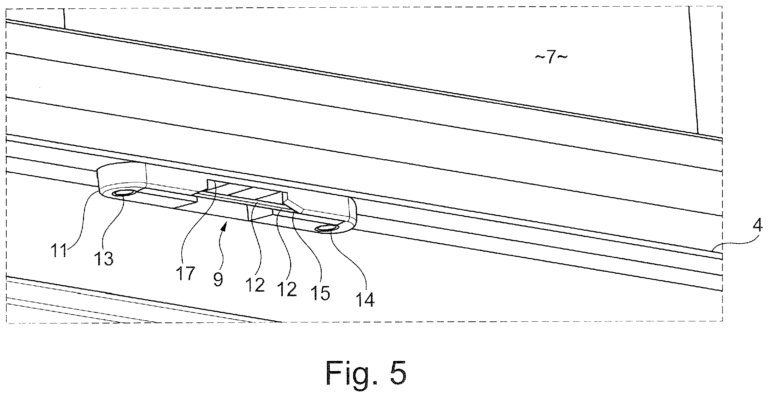

Fig. 5 zeigt in einer ausschnittsweisen perspektivischen Darstellung eine ähnliche Darstellung wie Fig. 4. In beiden Darstellungen ist ersichtlich, dass das Aufnahmebauteil 11 einen langgestreckten Führungskanal 15 aufweist, in den Öffnungen 16 münden, durch die das Feststellorgan 12 innerhalb des Aufnahmebauteils 11 geführt ist.

Von unten und von der Seite her teilweise offen ist eine fensterartige Öffnung 17 vorgesehen, die es ermöglicht, dass eine Bedienperson in das Aufnahmebauteil 11 hineingreifen kann, um das gering vorgespannte Feststellorgan 12 manuell zu ergreifen und in die Betriebsstellung zu bringen.

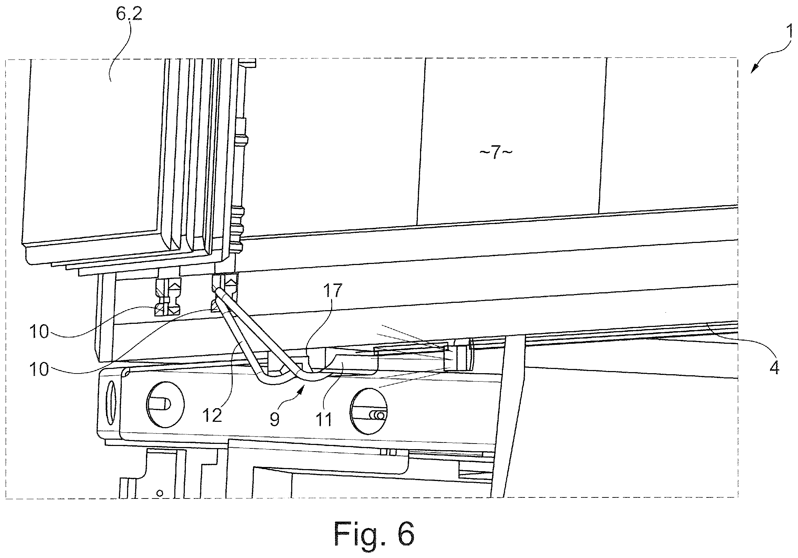

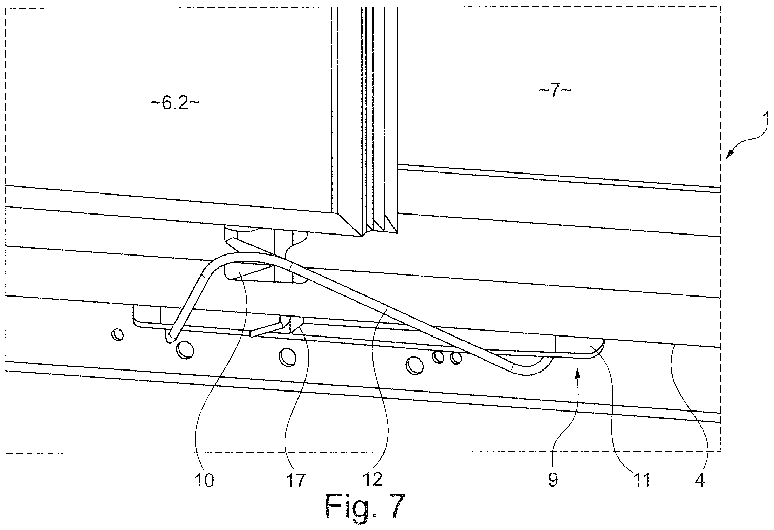

Fig. 6 zeigt einen Zustand, bei dem die Hecktür 6.2 sich im geöffneten und gesicherten Zustand befindet. Das elastische Feststellorgan 12 ist aus dem Aufnahmebauteil 11 herausbewegt worden, hat sich dabei gelängt und eine Feststellspannkraft aufgebaut. Es hat dabei eine Schlaufe gebildet, wobei diese Schlaufe um das in der Zeichnung rechte Feststellhalteteil 10 gelegt wurde, so dass die Hecktür 6.2 sicher in ihrer aufgeschwenkten Offenstellung am Nutzfahrzeugaufbau 1 gehalten ist. Fig. 7 zeigt diese gesicherte Öffnungsposition aus einer anderen Ansicht vergrößert.

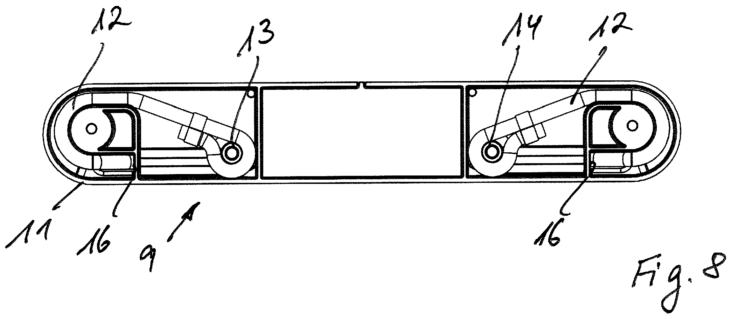

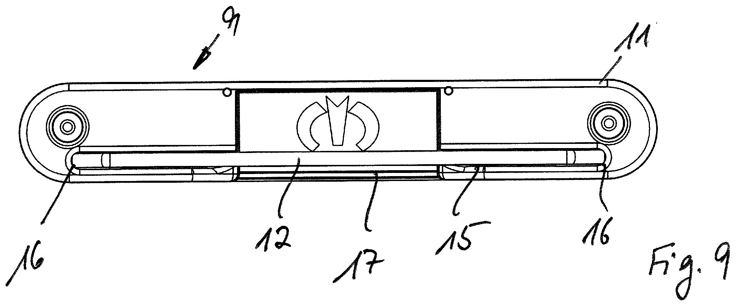

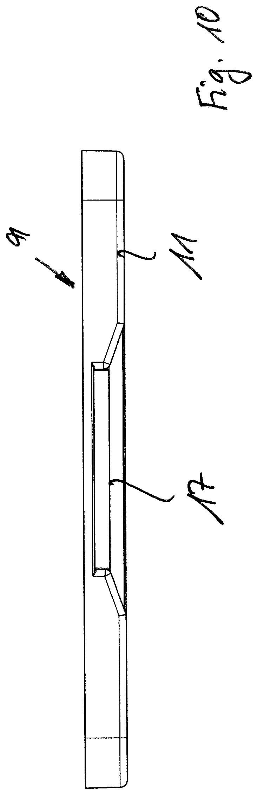

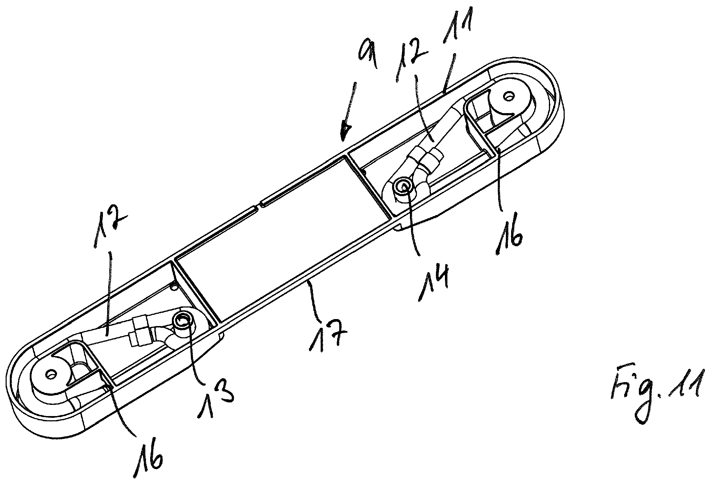

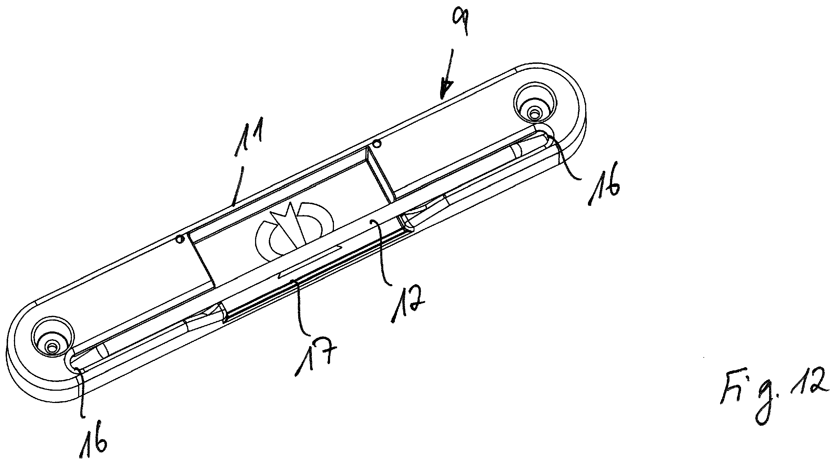

Die Fig. 8 bis 12 verdeutlichen in verschiedenen Ansichten ein Ausführungsbeispiel der Feststellvorrichtung 9 mit seinem Aufnahmebauteil 11 und dem Feststellorgan 12, das in dem hier gezeigten Ausführungsbeispiel jeweils schlaufenartige Enden aufweist, die an Haltekörpern 13 und 14 befestigt sind. Über die Öffnungen 16 ist das Feststellorgan 12 zu der fensterartigen Öffnung 17 geführt, und kann dort von einer Bedienperson ergriffen werden. Das Feststellorgan 12 hat eine derartige eigene Vorspannung, dass es in der Außerbetriebsstellung sicher an den Haltekörpern 13 und 14 mit einer eigenen Vorspannung gespannt gehalten ist. Gleichwohl kann es von der Bedienperson ergriffen werden, was zu einer selbsttätig gebildeten Schlaufe führt, um es, wie in Fig. 6 gezeigt, um das Feststellhalteteil 10 der Hecktür 6.1, 6.2 zu legen.

## Patentansprüche

1. Nutzfahrzeugaufbau (1) für insbesondere Kühlfahrzeuge mit einem von einem Laderaumboden (4), Seitenwänden (7), einem Dach (8), einer Stirnwand (5) sowie zumindest einer aus einer Schließstellung in eine im Bereich einer Seitenwand (7) gelegene Öffnungsstellung aufschwenkbaren Hecktür (6.1, 6.2) und/oder Seitentür, wobei die Hecktür und/oder Seitentür in ihrer Öffnungsstellung über eine Feststellvorrichtung (9) gegen ein unbeabsichtigtes Verschwenken sicherbar ist, **dadurch gekennzeichnet, dass** die Feststellvorrichtung (9) als vormontierte Bau- und Montageeinheit mit integriertem Feststellorgan (12) ausgebildet ist und ein unterhalb des Laderaumbodens (4) angeordnetes Aufnahmebauteil (11) mit zumindest zwei Öffnungen (16) für ein elastisches und vorspannbares Feststellorgan (12) der Feststellvorrichtung (9) aufweist, das innerhalb des Aufnahmebauteils (11) an mit Lageabstand zueinander angeordneten Führungskörpern geführt oder an Haltekörpern (13, 14) gehalten ist, durch die zwei Öffnungen (16) aus dem Aufnahmebauteil (11) unter Erzeugung einer Feststellspannkraft herausbewegbar und als Schlaufe an einem Feststellhalteteil (10) der Hecktür (6.1, 6.2) und/oder Seitentür festlegbar ist.

2. Nutzfahrzeugaufbau (1) nach Anspruch 1, **dadurch gekennzeichnet, dass** das Feststellorgan (12) als Expanderseil oder als Expanderschnur ausgebildet ist.

3. Nutzfahrzeugaufbau (1) nach Anspruch 2, **dadurch gekennzeichnet, dass** das Feststellorgan (12) als Gummischnur oder Gummiseil ausgebildet ist.

4. Nutzfahrzeugaufbau (1) nach einem der Ansprüche 1 bis 3, **dadurch gekennzeichnet, dass** das Feststellorgan (12) als Endlosexpanderseil oder als Endlosexpanderschnur ausgebildet ist und um die zwei innerhalb des Aufnahmebauteils mit Lageabstand zueinander angeordnete Führungskörper geführt ist.

5. Nutzfahrzeugaufbau (1) nach einem der Ansprüche 1 bis 3, **dadurch gekennzeichnet, dass** das Feststellorgan (12) zwei Enden aufweist, die innerhalb des Aufnahmebauteils (11) an den mit Lageabstand zueinander angeordneten Haltekörpern (13, 14) befestigt sind.

6. Nutzfahrzeugaufbau (1) nach einem der Ansprüche 1 bis 5, **dadurch gekennzeichnet, dass** die beiden Öffnungen (16) des Aufnahmebauteils (11) in einen offenen Führungskanal (15) münden, in dem bereichsweise das Feststellorgan (12) in seiner Außerbetriebsstellung gelegen ist.

7. Nutzfahrzeugaufbau (1) nach einem der Ansprüche 1 bis 6, **dadurch gekennzeichnet, dass** das Feststellorgan (12) in seiner Außerbetriebsstellung vorgespannt ist.

8. Nutzfahrzeugaufbau (1) nach einem der Ansprüche 1 bis 7, **dadurch gekennzeichnet, dass** das Aufnahmebauteil (11) eine fensterartige Öffnung (17) zum manuellen Ergreifen des Feststellorgans (12) aufweist.

9. Nutzfahrzeugaufbau (1) nach einem der Ansprüche 1 bis 8, **dadurch gekennzeichnet, dass** das Aufnahmebauteil (11) mit einem Unterteil und/oder mit einem Rahmenteil des Nutzfahrzeugaufbaus (1) verschraubt, verklebt oder vernietet ist.

10. Nutzfahrzeugaufbau (1) nach einem der Ansprüche 1 bis 9, **dadurch gekennzeichnet, dass** die Schlaufe des Feststellorgans (12) in der Öffnungsstellung der Hecktür (6.1, 6.2) um das Feststellhalteteil (10) der Hecktür (6.1, 6.2) und/oder Seitentür gelegt ist und die Feststellspannkraft auf das Feststellhalteteil der Hecktür (6.1, 6.2) und/oder Seitentür überträgt.

11. Nutzfahrzeugaufbau (1) nach Anspruch 1, **dadurch gekennzeichnet, dass** das Feststellorgan (12) mit einer Feder verbunden ist.

## Claims

1. Commercial vehicle structure (1) for refrigerated vehicles in particular, comprising a load compartment floor (4), side walls (7), a roof (8), a front wall (5) and at least one rear door (6.1, 6.2) and/or side door which can be swung open from a closed position into an open position located in the region of a side wall (7), wherein the rear door and/or side door can be secured in their open position against unintentional pivoting via a locking device (9), **characterized in that** the locking device (9) is designed as a pre-assembled construction and mounting unit with integrated locking member (12) and a receiving component (11) arranged below the load compartment floor (4) with at least two openings (16) for an elastic and pre-tensionable locking member (12) of the locking device (9), which locking member (12) is guided within the receiving component (11) on guide bodies arranged at a distance from one another or held on retaining bodies (13, 14), can be moved out of the receiving component (11) through two openings (16) while generating a locking clamping force and can be fixed as a loop on a locking retaining part (10) of the rear door (6.1, 6.2) and/or side door.

2. Commercial vehicle structure (1) according to claim 1, **characterized in that** the locking member (12) is designed as an expander cable or as an expander cord.

3. Commercial vehicle structure (1) according to claim 2, **characterized in that** the locking member (12) is designed as a rubber cord or rubber rope.

4. Commercial vehicle structure (1) according to one of claims 1 to 3, **characterized in that** the locking member (12) is designed as an endless expander cable or as an endless expander cord and is guided around the two guide bodies arranged within the receiving component at a distance from each other.

5. Commercial vehicle structure (1) according to one of claims 1 to 3, **characterized in that** the locking member (12) has two ends which are fastened within the receiving component (11) to the retaining bodies (13, 14) arranged at a distance from each other.

6. Commercial vehicle structure (1) according to one of claims 1 to 5, **characterized in that** the two openings (16) of the receiving component (11) open into an open guide channel (15) in which the locking member (12) is located in its inoperative position in some areas.

7. Commercial vehicle structure (1) according to one of claims 1 to 6, **characterized in that** the locking member (12) is preloaded in its inoperative position.

8. Commercial vehicle structure (1) according to one of claims 1 to 7, **characterized in that** the receiving component (11) has a window-like opening (17) for manually gripping the locking member (12).

9. Commercial vehicle structure (1) according to one of claims 1 to 8, **characterized in that** the receiving component (11) is screwed, glued or riveted to a lower part and/or to the commercial vehicle structure (1).

10. Commercial vehicle structure (1) according to one of claims 1 to 9, **characterized in that** the loop of the locking member (12) is placed around the locking retaining part (10) of the rear door (6.1, 6.2) and/or side door in the opening position of the rear door (6.1, 6.2) and transmits the locking clamping force to the locking retaining part of the rear door (6.1, 6.2) and/or side door.

11. Commercial vehicle structure (1) according to claim 1, **characterized in that** the locking member (12) is connected to a spring.

## Revendications

1. Carrosserie de véhicule utilitaire (1), en particulier pour des véhicules frigorifiques, comportant un plancher d'espace de chargement (4), des parois latérales (7), un toit (8), une paroi frontale (5) ainsi qu'au moins un hayon (6.1, 6.2) et/ou une porte latérale pouvant pivoter d'une position de fermeture à une position d'ouverture située dans la zone d'une paroi latérale (7), dans laquelle le hayon et/ou la porte latérale peuvent être bloquées dans leur position d'ouverture par l'intermédiaire d'un dispositif d'arrêt (9) pour empêcher un pivotement involontaire, **caractérisée en ce que** le dispositif d'arrêt (9) est réalisé sous forme d'unité structurale et de montage prémontée comportant un organe d'arrêt (12) intégré et présente un élément de réception (11) disposé sous le plancher d'espace de chargement (4) comportant au moins deux ouvertures (16) pour un organe d'arrêt (12) élastique et pouvant être précontraint du dispositif d'arrêt (9), lequel organe d'arrêt est guidé à l'intérieur de l'élément de réception (11) sur des corps de guidage disposés avec un écart de position entre eux ou est maintenu sur des corps de maintien (13, 14), peut être sorti de l'élément de réception (11) par les deux ouvertures (16) en générant une force de serrage d'arrêt et peut être fixé en tant que boucle à un élément de fixation (10) du hayon (6.1, 6.2) et/ou de la porte latérale.

2. Carrosserie de véhicule utilitaire (1) selon la revendication 1, **caractérisée en ce que** l'organe d'arrêt (12) est réalisé sous forme de corde d'expansion ou de cordon d'expansion.

3. Carrosserie de véhicule utilitaire (1) selon la revendication 2, **caractérisée en ce que** l'organe d'arrêt (12) est réalisé sous forme de cordon de caoutchouc ou de corde de caoutchouc.

4. Carrosserie de véhicule utilitaire (1) selon l'une des revendications 1 à 3, **caractérisée en ce que** l'organe d'arrêt (12) est réalisé sous forme de corde d'expansion sans fin ou de cordon d'expansion sans fin et est guidé autour des deux corps de guidage disposés avec un écart de position entre eux à l'intérieur de l'élément de réception.

5. Carrosserie de véhicule utilitaire (1) selon l'une des revendications 1 à 3, **caractérisée en ce que** l'organe d'arrêt (12) présente deux extrémités fixées à l'intérieur de l'élément de réception (11) sur les corps de maintien (13, 14) disposés avec un écart de position entre eux.

6. Carrosserie de véhicule utilitaire (1) selon l'une des revendications 1 à 5, **caractérisée en ce que** les deux ouvertures (16) de l'élément de réception (11) débouchent dans un canal de guidage (15) ouvert dans lequel est situé, dans certaines zones, l'organe d'arrêt (12) dans sa position hors service.

7. Carrosserie de véhicule utilitaire (1) selon l'une des revendications 1 à 6, **caractérisée en ce que** l'organe d'arrêt (12) est précontraint dans sa position hors service.

8. Carrosserie de véhicule utilitaire (1) selon l'une des revendications 1 à 7, **caractérisée en ce que** l'élément de réception (11) présente une ouverture (17) de type fenêtre pour la saisie manuelle de l'organe d'arrêt (12).

9. Carrosserie de véhicule utilitaire (1) selon l'une des revendications 1 à 8, **caractérisée en ce que** l'élément de réception (11) est vissé, collé ou riveté à une partie inférieure et/ou à une partie formant cadre de la carrosserie de véhicule utilitaire (1).

10. Carrosserie de véhicule utilitaire (1) selon l'une des revendications 1 à 9, **caractérisée en ce que,** dans la position d'ouverture du hayon (6.1, 6.2), la boucle de l'organe d'arrêt (12) est placée autour de la partie de maintien d'arrêt (10) du hayon (6.1, 6.2) et/ou de la porte latérale et transmet la force de serrage d'arrêt à la partie de maintien d'arrêt du hayon (6.1, 6.2) et/ou de la porte latérale.

11. Carrosserie de véhicule utilitaire (1) selon la revendication 1, **caractérisée en ce que** l'organe d'arrêt (12) est relié à un ressort.
